# EUROPÄISCHE PATENTANMELDUNG

(11) **EP 0 780 267 A1**
(43) Veröffentlichungstag der Anmeldung: **25.06.1997**
(21) Anmeldenummer: 96810853.0
(22) Anmeldetag: 06.12.1996
(51) Int. Cl.: B60R 9/04

(54) **Fuss zur lösbaren Befestigung einer Dachreling**

(30) Priorität: 22.12.1995 CH 3669/95
(71) Anmelder: Alusuisse Technology & Management AG, 8212 Neuhausen am Rheinfall (CH)
(72) Erfinder: Herz, Erich, 78224 Singen/Hohentwiel (DE)

(57) **Zusammenfassung**

Ein Fuss (12) zur lösbaren Befestigung einer Dachreling (10) an einem Fahrzeug liegt in montierter Lage einer Dachhaut (14) auf und ist über einen die Dachhaut durchsetzenden Zapfen (20) mit einem Stützblech (16) verschraubt. Ein Gewindebolzen (22) greift mit einem ersten Gewindeteil (24) mit Linksgewinde in eine Gewindebohrung (34) im Zapfen (20) ein und auf einen zweiten, in montierter Lage das Stützblech (16) durchsetzenden Gewindeteil (26) mit Rechtsgewinde ist eine Befestigungsmutter (30) aufschraubbar. Die beiden Gewindeteile (24, 26) sind durch ein Auflageteil (28) von einander getrennt und das Auflageteil (28) ist durch die Schraubbewegung der Befestigungsmutter (30) mit dem Stützblech (16) in Anschlag bringbar.

## Beschreibung

Die Erfindung betrifft einen Fuss zur lösbaren Befestigung einer Dachreling an einem Fahrzeug, insbesondere an einem Personenkraftwagen, Transporter oder dgl. Nutzfahrzeug, wobei der Fuss in montierter Lage einer Dachhaut aufliegt und über einen die Dachhaut durchsetzenden Zapfen mit einem Stützblech verschraubt ist.

Zur diebstahlsicheren Befestigung der Dachreling an einem PKW wird der Fuss von der Fahrzeuginnenseite her mit dem Stützblech verschraubt. Bei einer bekannten Befestigungsart liegt ein am Fuss integral angeformter Stützzapfen dem Stützblech auf. Dies bedingt, dass sowohl der Stützapfen als auch die Distanz zwischen Dachhaut und Stützblech mit geringer Toleranz gefertigt sind, was unter praxisüblichen Produktionsbedingungen nicht immer gewährleistet ist und beispielsweise zu Problemen bei der Dichtung führen kann.

Angesichts dieser Gegebenheiten hat sich der Erfinder die Aufgabe gestellt, einen Fuss für eine Dachreling der eingangs erwähnten Art zu schaffen, der hohe Toleranzen bezüglich der Befestigungselemente zulässt und auf einfache Weise die Voreinstellung des Anpressdruckes einer zwischen Dachhaut und Fuss angeordneten Dichtung ermöglicht.

Zur erfindungsgemässen Lösung der Aufgabe führt, dass ein Gewindebolzen mit einem ersten Gewindeteil in eine Gewindebohrung im Zapfen eingreift und auf einen zweiten, in montierter Lage das Stützblech durchsetzenden Gewindeteil eine Befestigungsmutter aufschraubbar ist, wobei die beiden durch ein Auflageteil von einander getrennten Gewindeteile ein bezüglich der Schraubrichtung entgegengesetztes Gewinde aufweisen und das Auflageteil durch die Schraubbewegung der Befestigungsmutter mit dem Stützblech in Anschlag bringbar ist.

Durch die erfindungsgemässe Ausgestaltung des Gewindebolzens erfolgt beim Verschrauben des Fusses mit dem Stützblech eine selbsttätige Einstellung der den Fuss am Stützblech abstützenden, aus dem Gewindebolzen und dem Auflageteil gebildeten, verstellbaren Stützvorrichtung.

Ueblicherweise weist der erste Gewindeteil ein Linksgewinde und der zweite Gewindeteil ein Rechtsgewinde auf.

Der Anpressdruck einer zwischen Dachhaut und Fuss angeordneten Dichtung kann auf einfache Weise durch eine Hemmung der freien Drehbarkeit des ersten Gewindeteils in der Gewindebohrung im Zapfen voreingestellt werden. Zur Hemmung der freien Drehbarkeit kann beispielsweise die Gewindepaarung durch Verringerung des Gewindespiels reibschlüssig ausgestaltet sein. Ein weitere Möglichkeit besteht darin, zur Hemmung der freien Drehbarkeit zwischen dem ersten Gewindeteil und der Gewindebohrung ein Sperrelement, insbesondere eine auf den ersten Gewindeteil aufgetragene Kunststoffbeschichtung, anzuordnen. Als Sperrelement kann auch ein im ersten Gewindeteil oder in der Gewindebohrung in einer Längsnut angeordneter Einlegeteil aus Kunststoff dienen, welcher beim Einschrauben des Gewindeteils in die Gewindegänge gepresst wird und dadurch die freie Drehbarkeit hemmt.

Eine weitere bevorzugte Art zur Voreinstellung des Anpressdruckes der Dichtung wird darin gesehen, dass das Auflageteil durch die Schraubbewegung der Befestigungsmutter mit mindestens einer um ein Mass vom Stützblech aufragenden Erhebung in Anschlag bringbar ist, wodurch die weitere Drehbarkeit des Auflageteils bei fortgesetzter Schraubbewegung der Befestigungsmutter gehemmt ist. Das Andruckmass der Dichtung ist damit durch die Höhe der Erhebungen vorgegeben. Die Erhebungen können beispielsweise aus dem Stützblech herausgeformte Rippen oder Noppen sein.

Bevorzugt ist das Auflageteil als eine am Gewindebolzen integral angeformte Scheibe ausgestaltet, deren Umfanglinie als Polygon, insbesondere als Vier- oder Sechskant, ausgestaltet ist. Damit die Oeffnung in der Dachhaut zur Durchführung des Zapfens möglichst klein gehalten werden kann, entspricht der durch die Umfanglinie des Auflageteils definierte Durchmesser bevorzugt maximal dem Durchmesser des Zapfens.

Eine kostengünstige Herstellung des Fusses ergibt sich durch dessen Formung als Schmiedeteil aus Aluminium. Der Fuss kann jedoch auch im Kokillengiess-, Druckgiess-, Vakuumdruckgiess- oder einem anderen Giessverfahren hergestellt werden. Geeignete Herstellungsverfahren sind auch Thixocasting und Thixoschmieden. Als Werkstoffe können neben Aluminium auch Magnesium, Zink, Kunststoffe, ggf. mit Metall- oder Glasfaserverstärkung, sowie weitere im Fahrzeugbau üblicherweise verwendete Materialien eingesetzt werden.

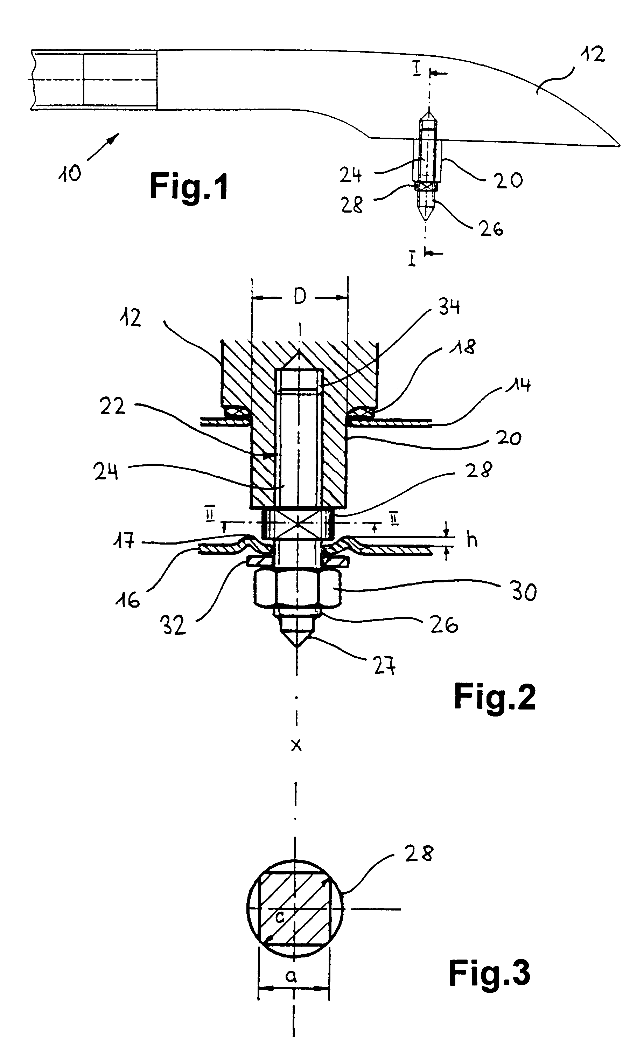

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1 die Seitenansicht eines Fusses einer Dachreling;
- Fig. 2 einen Querschnitt durch den Fuss von Fig. 1 nach deren Linie I-I;
- Fig. 3 einen Querschnitt durch das Auflageteil von Fig. 2 nach deren Linie II-II.

Eine aus Gründen der besseren Uebersicht nicht näher dargestellte Dachreling 10 für einen Personenkraftwagen weist einen Fuss 12 auf, der über eine zwischengeordnete Dichtung 18 einer äusseren Dachhaut 14 aufliegt. Die Befestigung des Fusses 12 auf dem Dach des Personenkraftwagens erfolgt über einen Gewindebolzen 22, der einends in einem am Fuss 12 integral angeformten Zapfen 20 verankert ist und andernends mittels einer Befestigungsmutter 30 an einer inneren Dachhaut bzw. einem Stützblech 16 festgeschraubt ist.

Der Gewindebolzen 22 greift mit einem ersten Gewindeteil 24 mit Linksgewinde in eine Gewindebohrung 34 im Zapfen 20 ein. Ein zweiter Gewindeteil 26 mit Rechtsgewinde durchsetzt eine Oeffnung im Stützblech 16 und ist über die Befestigungsmutter 30 sowie eine zwischengeordnete Unterlegscheibe 32 gegen das Stützblech 16 verschraubt. Das freie Ende des Gewindeteils 26 mit Rechtsgewinde ist zur Erleichterung der Einführung in die Oeffnung im Stützblech 16 mit einer kegelförmigen Spitze 27 versehen.

Die beiden Gewindeteile 24, 26 des Gewindebolzens 22 sind durch ein an diesem integral angeformtes Auflageteil 28 von einander getrennt. Dieses Auflageteil 28 ist als Scheibe ausgestaltet, deren Umfanglinie in Blickrichtung der Bolzenachse x als Quadrat mit einer Kantenlänge a und einer Diagonalen c ausgestaltet ist, wobei die Ecken des Quadrates abgerundet sind. Die Diagonale c entspricht hier dem Durchmesser D des Zapfens 20.

Im Stützblech 16 sind im Bereich der äusseren Umfanglinie des Auflageteils 28 rippenartige Erhebungen 17 eingeformt, deren Höhe h von beispielsweise 1,5 mm ein Andruckmass für die Dichtung 18 definiert.

Nachfolgend wird die Montage des Fusses 12 der Dachreling 10 auf dem Dach eines Personenkraftwagens näher beschrieben.

Zunächst wird der Gewindeteil 24 des Gewindebolzens 22 vollständig in die Gewindebohrung 34 des Zapfens 20 eingeschraubt und der Fuss 12 mit zwischenliegender Dichtung 18 an die Dachhaut 14 angelegt, wobei das freie Ende des zweiten Gewindeteils 26 eine Oeffnung im Stützblech 16 durchsetzt. Danach wird von der Wageninnenseite her die Befestigungsmutter 30 unter Zwischenordnung einer Unterlegscheibe 32 auf das zweite Gewindeteil 26 aufgeschraubt und festgezogen.

Beim Festziehen der Befestigungsmutter 30 dreht sich der Gewindebolzen 22 zunächst mit. Durch die Ausbildung des ersten Gewindeteils 24 sowie der diesem entsprechenden Gewindebohrung 34 als Linksgewinde wird der Gewindeteil 24 beim Festziehen der Befestigungsmutter 30 aus der Gewindebohrung 34 herausgedreht, bis das Auflageteil 28 den Erhebungen 17 anliegt, woduch eine weitere Drehbewegung des Gewindebolzens 22 verhindert wird. Durch fortgesetztes Festziehen der Befestigungsmutter 30 wird der Fuss 18 um den Betrag der Höhe h der Erhebungen 17 gegen die Dachhaut 14 gezogen, wodurch die zwischenliegende Dichtung mit einem definierten Anpressdruck gegen die Dachhaut 14 gepresst wird und so eine optimale Abdichtung bewirkt.

Bei einer alternativen Möglichkeit zur Voreinstellung des Anpressdruckes der Dichtung 18 wird die freie Drehbarkeit des ersten Gewindeteils 24 in der Gewindebohrung 34 im Zapfen 20 auf bekannte Art -- beispielsweise durch eine Kunststoffbeschichtung des Gewindeteils 24 -- gehemmt. Die Stärke des Reibschlusses zwischen Gewindebolzen 22 und Zapfen 20 steht in direkter Beziehung zum Anpressdruck der Dichtung 18, wodurch sich der Anpressdruck der Dichtung 18 durch Einstellung der Reibkraft auf einfache Weise voreinstellen lässt.

## Patentansprüche

1. Fuss zur lösbaren Befestigung einer Dachreling (10) an einem Fahrzeug, insbesondere an einem Personenkraftwagen, Transporter oder dgl. Nutzfahrzeug, wobei der Fuss (12) in montierter Lage einer Dachhaut (14) aufliegt und über einen die Dachhaut durchsetzenden Zapfen (20) mit einem Stützblech (16) verschraubt ist,
dadurch gekennzeichnet, dass
ein Gewindebolzen (22) mit einen ersten Gewindeteil (24) in eine Gewindebohrung (34) im Zapfen (20) eingreift und auf einen zweiten, in montierter Lage das Stützblech (16) durchsetzenden Gewindeteil (26) eine Befestigungsmutter (30) aufschraubbar ist, wobei die beiden durch ein Auflageteil (28) von einander getrennten Gewindeteile (24, 26) ein bezüglich der Schraubrichtung entgegengesetztes Gewinde aufweisen und das Auflageteil (28) durch die Schraubbewegung der Befestigungsmutter (30) mit dem Stützblech (16) in Anschlag bringbar ist.

2. Fuss nach Anspruch 1, dadurch gekennzeichnet, dass der erste Gewindeteil (24) ein Linksgewinde und der zweite Gewindeteil (26) ein Rechtsgewinde aufweist.

3. Fuss nach Anspruch 1 oder 2, dadurch gekennzeichnet, dass zur Voreinstellung des Anpressdruckes einer zwischen Fuss (12) und Dachhaut (14) angeordneten Dichtung (18) die freie Drehbarkeit des ersten Gewindeteils (24) in der Gewindebohrung (34) im Zapfen (20) gehemmt ist.

4. Fuss nach Anspruch 3, dadurch gekennzeichnet, dass zur Hemmung der freien Drehbarkeit die Gewindepaarung (24,34) durch Verringerung des Gewindespiels reibschlüssig ausgestaltet ist.

5. Fuss nach Anspruch 3, dadurch gekennzeichnet, dass zur Hemmung der freien Drehbarkeit zwischen dem ersten Gewindeteil (24) und der Gewindebohrung (34) ein Sperrelement, insbesondere eine auf den ersten Gewindeteil (24) aufgetragene Kunststoffbeschichtung, angeordnet ist.

6. Fuss nach Anspruch 3, dadurch gekennzeichnet, dass zur Hemmung der freien Drehbarkeit im ersten Gewindeteil (24) oder in der Gewindebohrung (34) eine Längsnut mit einem Einlegeteil aus Kunststoff angeordnet ist.

7. Fuss nach einem der Ansprüche 1 bis 6, dadurch gekennzeichnet, dass zur Voreinstellung des Anpressdruckes einer zwischen Fuss (12) und Dachhaut (14) angeordneten Dichtung (18) das Auflageteil (28) durch die Schraubbewegung der Befestigungsmutter (30) mit mindestens einer um ein Mass (h) vom Stützblech (16) aufragenden Erhebung (17) in Anschlag bringbar ist, wodurch die weitere Drehbarkeit des Auflageteils (28) bei fortgesetzter Schraubbewegung der Befestigungsmutter (30) gehemmt ist.

8. Fuss nach Anspruch 7, dadurch gekennzeichnet, dass die Erhebungen (17) aus dem Stützblech (16) herausgeformte Rippen oder Noppen sind.

9. Fuss nach einem der Ansprüche 1 bis 8, dadurch gekennzeichnet, dass das Auflageteil (28) als eine am Gewindebolzen (22) integral angeformte Scheibe ausgestaltet ist.

10. Fuss nach Anspruch 9, dadurch gekennzeichnet, dass die Umfanglinie des Auflageteils (28) als Polygon, insbesondere als Vier- oder Sechskant, ausgestaltet ist.

11. Fuss nach Anspruch 10, dadurch gekennzeichnet, dass der durch die Umfanglinie des Auflageteils (28) definierte Durchmesser maximal dem Durchmesser (D) des Zapfens (20) entspricht.

12. Fuss nach einem der Ansprüche 1 bis 11, dadurch gekennzeichnet, dass er als Schmiede- bzw. Thixoschmiede-, Druckguss-, Vakuumdruckguss-, Kokillenguss- oder Thixocastingteil aus Aluminium, Magnesium, Zink oder Kunststoff, ggf. mit Metall- oder Glasfaserverstärkung, geformt ist.
